# EUROPEAN PATENT SPECIFICATION

(11) **EP 2 095 595 B1**
(45) Date of publication and mention of the grant of the patent: **06.08.2014**
(21) Application number: 06841195.8
(22) Date of filing: 28.12.2006
(51) Int. Cl.: H04L 29/06

(54) **Mobile IP proxy**
Mobil-IP-Proxy
Système proxy IP mobile

(43) Date of publication of application: 02.09.2009
(73) Proprietor: Telefonaktiebolaget LM Ericsson (publ), 126 25 Stockholm (SE)
(72) Inventor: ROMMER, Stefan, S-426 74 Västra Frölunda (SE); TURÁNYI, Zoltán Richárd, H-1136 Budapest (HU)
(74) Representative: Vejgaard, Christian
(86) International application number: PCT/EP2006/012577
(87) International publication number: WO 2008/080420

(56) References cited:
- US-A1- 2003 223 439
- US-A1- 2003 224 788
- THUBERT CISCO R WAKIKAWA KEIO UNIVERSITY V DEVARAPALLI NOKIA P: "Global HA to HA protocol" IETF STANDARD-WORKING-DRAFT, INTERNET ENGINEERING TASK FORCE, IETF, CH, no. 2, 28 September 2006 (2006-09-28), XP015047292 ISSN: 0000-0004

## Description

### TECHNICAL FIELD

The present invention relates to a mobile IP solution and in particular to a solution for handling an intermediate network in a Mobile IP environment.

### BACKGROUND OF THE INVENTION

A "hot" topic in the evolution of fixed and mobile communications is Multi-Access, i.e. the capability to access the same set of services over multiple access technologies. Possible access technologies include both 3GPP-defined accesses (2G, 3G, LTE) and non-3GPP-defined technologies (e.g. WLAN, WiMAX, DSL). One particular aspect of multi-access is session continuity, i.e. the capability for the user to move between different accesses technologies without interrupting an ongoing service session.

An important technology to enable session continuity is Mobile IP (MIP). MIP allows the terminal to use a stable IP address (so called Home Address) regardless of its current point of attachment (PoA) to the Internet. The terminal will also use local IP addresses (so called Care-of Addresses) that represents the terminal's current PoA. Mobile IP hides these local addresses from the applications running on the terminal.

The typical case with 3GPP accesses is that the mobile operator (MO) owns the accesses (radio network) and has the relation with the end customers (subscribers). With non-3GPP accesses such as e.g. WLAN and WiMAX, it is likely that the mobile operator will not own all access networks. Instead the MO will make business agreements with access network providers (e.g. WLAN hotspot operators) that allow the MO's subscribers to access the MO services also over the non-3GPP accesses.

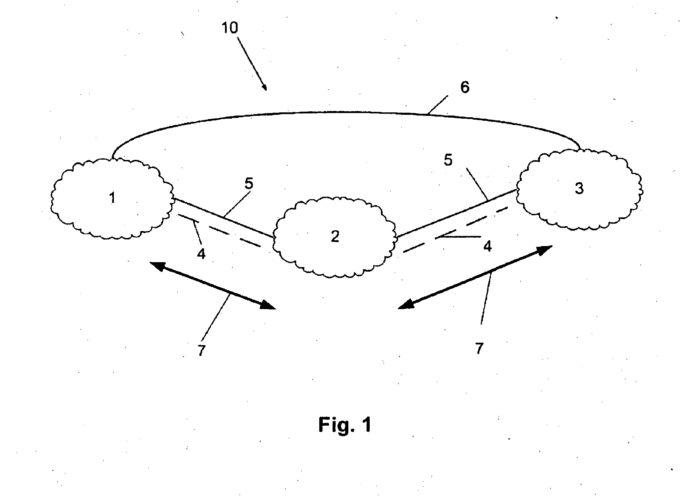

These business aspects also have consequences on the roaming scenario. In a 3GPP roaming scenario, as shown in Fig. 1, only two operators are involved; a visited operator 2 and a home operator 3. When roaming in non-3GPP access, three business entities may be involved; non-3GPP access provider 1, visited operator 2 and home operator 3. In this case business agreements 7 exist between home and visited operators as well as between visited operator and non-3GPP access provider, but not between home operator and the non-3GPP IP access provider.

The term "Mobile IP Proxy" has been used before in different contexts:
- MIP Proxy as a means to support MIPv4 traversal across VPN gateways. The MIP Proxy is here always used together with a VPN gateway.
- A protocol to extend MIPv6 to remove its link layer dependencies on the Home Link and distribute the HAs at IP layer. A MIP proxy is introduced for Local Mobility Management and Route Optimization.

The MIP Proxy is in the above mentioned references used for other purposes and with different procedures than the MIP Proxy proposed in this invention. Consequently, the cited references shall not be taken as prior art.

In the three-network model, control plane signalling 4 such as user authentication signalling will typically be relayed (proxied) by the visited network (VN) 2. This is in many cases required since the non-3GPP access network 1 may not know how to find the home network 3 and vice versa. This is a consequence of that there is no mutual agreement or inter-connect setup between the two networks.

It is however not clear if and how the User Plane (UP) 5 will be relayed by the visited (intermediate) network 2. Reasons for relaying traffic through the VN is to allow the VN operator to have control over the user traffic, e.g. for charging, policy enforcement, lawful Intercept, etc. The user plane may be bypassed between the access network 1 and the home network 3 without involving the visited network 2. In this scenario it is impossible for the visited network operator to control the traffic and handle the above mentioned services.

The Mobile IP protocol controls mobility and UP routing between terminal and home network but does not help here. Mobile IP in its basic form has only support for two network levels:
1. Access Network (with Access Router, Foreign Agent)
2. Home Network (with Home Agent)

Mobile IP sets up a UP tunnel between the MN or Foreign Agent in the access network and the Home Agent in the home network. In MIP there is thus no notion of a visited network. Instead the UP traffic will be routed using regular IP routing mechanisms between access network and the home network.

There is different existing (or future) possibilities for forcing the UP traffic through the VN. They are briefly discussed below:

### Terminal based approaches

Hierarchical Mobile IP (HMIP) is an extension of MIP that can be used to introduce an intermediate level, e.g. in the visited NW. A problem with HMIP is however that it requires HMIP functionality in the terminal. This will increase the complexity and possibly cost of the terminal.

An IPSec tunnel between MN and VN can be used as an alternative. Also this solution has significant terminal impact.

### Static tunnel/route approaches

Other alternatives to force UP traffic through the VN are to set up static routes or static tunnels between access network and VN, as well as between VN and HN. A drawback with these alternatives is that they put requirements on the non-3GPP access network. Since the MO does not own and operate the non-3GPP access it is beneficial if MO-specific requirements on the non-3GPP access are avoided. The non-3GPP access provider may further be a very "lean" entity (e.g. coffee-shop WLAN hotspot provider) which makes it technical and financial difficult to require MO-specific features.

### Network based mobility schemes

NW based mobility schemes such as Proxy MIP (PMIP) and NetLMM could be used. This alternative puts even more demanding requirements on the non-3GPP access NW since it must have support for the NW based mobility protocol. It will also be difficult to use this alternative for access technologies that already use e.g. PMIP for intra-access mobility. The two uses of the mobility schemes must then be aligned (if possible).

US 2003/0224788 A1 discloses a method and an apparatus for registering a mobile node with a home agent. A Mobile IP proxy is used to inform the mobile node whether the mobile node is an internal network or a remote network. The mobile node sends out a registration request. From the registration request, the Mobile IP proxy determines whether the mobile node is in the internal network or in a remote network. If the mobile node is in a remote network, the Mobile IP proxy acts as an intermediary, creating tunnels to the care-of-address and the home agent. Otherwise, the Mobile IP proxy can allow the mobile node and the home agent to communicate with each other without using the Mobile IP proxy as an intermediary.

### SUMMARY OF THE INVENTION

A "Mobile IP Proxy" function is introduced in the visited (intermediate) network. The MIP Proxy introduces an intermediate level in the hierarchy that enables the UP traffic to always be relayed via the visited network. Mobile IP signalling is modified in such a way that the MIP UP tunnel is split into two parts;
1) Between MN/FA and MIP Proxy, and
2) Between MIP Proxy and HA.

The purpose of the MIP Proxy is to ensure that MIP-tunnelled UP traffic is always tunnelled via the visited network. This will give the visited operator increased control of the UP, e.g. for charging, policy control and lawful intercept. The invention can be applied to both Mobile IPv4 and Mobile IPv6

The invention is realized in a number of aspects. A system according to claim 1.

Another aspect of the present invention is a method according to claim 6.

Embodiments are defined in the dependent claims.

The advantages of the invention compared with existing solutions include
- No terminal impacts.
   - The HMIP alternative requires terminal support.
- No impacts on non-3GPP access networks.
   - The setup using fixed tunnels and/or specific routing configurations between access NW and VN requires functionality in the access network.
- Easy to dynamically activate.
   - The use of the MIP Proxy can be dynamically controlled by the VN and/or HN on a per-session basis at session setup.
   - HMIP and static tunnel alternatives are difficult (impossible?) to use on a per-session basis.
- No User Plane overhead
   - HMIP and static tunnel approaches give UP tunnelling overhead

These and other aspects of the invention will be apparent from and elucidated with reference to the embodiments described hereinafter.

### BRIEF DESCRIPTION OF THE DRAWINGS

In the following the invention will be described in a non-limiting way and in more detail with reference to exemplary embodiments illustrated in the enclosed drawings, in which:
Fig. 1 illustrates schematically a typical network situation according to known technology;
Fig. 2 illustrates schematically a network architecture according to the present invention;
Fig. 3 illustrates schematically a network situation according to the present invention;
Fig. 4 illustrates schematically a signalling scheme according to one embodiment of the present invention;
Fig. 5a and b illustrates schematically signalling schemes according to two other embodiments of the present invention for Mobile IPv4;
Fig. 6 illustrates schematically a signalling scheme according to another embodiment of the present invention for Mobile IPv6;
Fig. 7 illustrates schematically an infrastructure device according to the present invention.

### DETAILED DESCRIPTION OF PREFERRED EMBODIMENTS

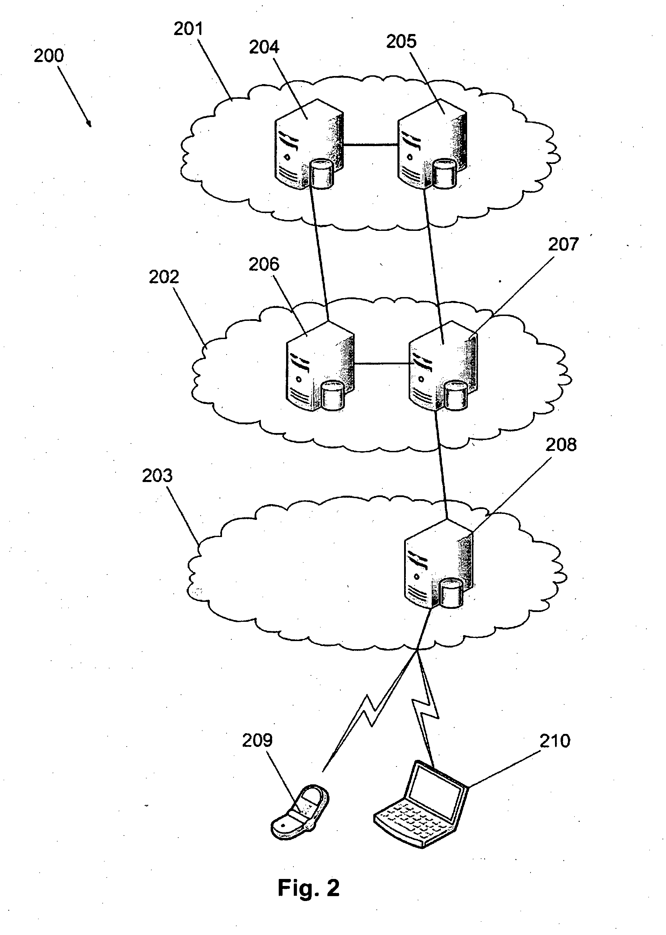

In Fig. 2, reference numeral 200 generally indicates a telecommunications network according to the present invention. The network comprises in this case three different network parts: home network 201 (HN), visited network 202 (VN), and access network 203 (AN). A visiting node, often referred to as a mobile node (MN), for instance a mobile station 209 or laptop 210 or some other user equipment (UE) communicates with the access network 203 through some wireless interface, e.g. GPRS, UMTS, WCDMA or similar interface compatible with packet based communication protocols. In the present invention an access gateway (for instance an access router or access point) 208 (AR) located in an access network 203 connects the UE to the network 200. The access gateway 208 in turn is connected to a Mobile IP (MIP) proxy in turn connected to a home agent 205 (HA) in the home network 201. The MIP proxy has communication with an AAA server 206 (vAAA) in the visited network 202 for handling authentication, authorization, and accounting services within the network 200 related to the communication session. Also, the home agent has communication to an AAA server 204 (hAAA) within the home network for the same purposes. These AAA servers are used for instance for authenticating the user, handling billing matters, communicate which services that are available for a certain user and so on as appreciated by the person skilled in the art. In MIP version 4, the UE may communicate with a foreign agent (FA) which in this case would be for instance the access gateway 208; however, it should be understood that other parts (not shown) of the access network may act as foreign agents as well. The concept of FA is not used for MIP version 6 networks.

In order to ensure that UP traffic is routed through the VN, the MIP Proxy is introduced in the VN.

The MIP Proxy 207 is a control plane (CP) and user plane (UP) proxy for MIP related signalling and UP tunnels. It essentially acts as a HA towards the UE 209, 210 and a UE towards the HA 205. A goal of the MIP Proxy solution is to make it transparent to the UE 209, 210. Depending on implementation alternative, the MIP Proxy could also be transparent to the HA. It should however be noted that the home operator may want to know if a MIP Proxy is used in the VN and transparency to the HN may therefore not be desired.

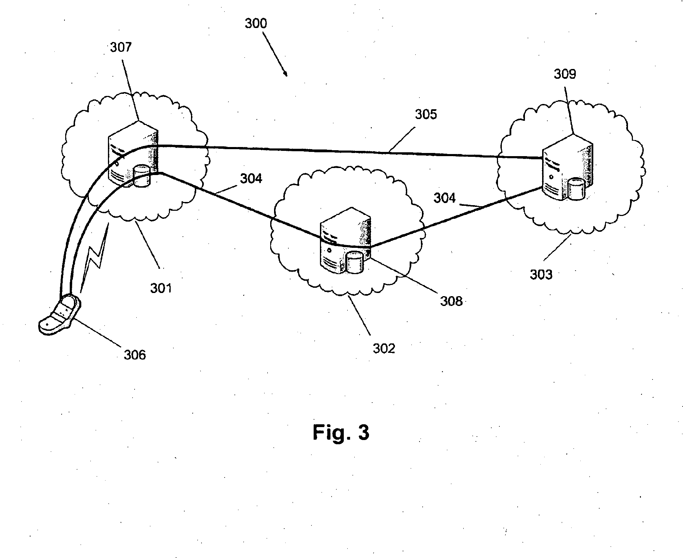

Fig. 3 shows an example of network according to the present invention with a mobile node (MN) 306 communicating with an access network 301 and a first hop router 307. The access network is in contact with a home network 303 with a Home Agent (HA) 309 directly or via a visited network 302 with a MIP proxy 308 acting as intermediate node. Two situations are plausible in this scenario: two different user plane (UP) MIP tunnels may be set up: one tunnel 305 directly to the HA 309 if there is no MIP proxy 308 in the visited network and one tunnel 304 to the HA 309 via the MIP proxy 308 if this is installed in the visited network 302.

In order for the MIP-tunnelled UP to be relayed via the MIP proxy 308, the MN 306, the MIP Proxy 308 and the HA 309 need to be configured with appropriate values for the Home Address, HA IP address and Care-of Address (CoA).

The HA IP address need to be configured as follows:
- The MN shall have HA IP address set to MIP Proxy IP address
- The MIP Proxy shall have HA IP address set to the actual HA IP address

In order to register the correct CoA in the MIP Proxy and HA, a MIP RRQ/BU (Registration Request/Binding Update) is first sent from the MN to the MIP Proxy. The CoA value in this RRQ/BU is
- CoA = UE local IP address or FA IP address

The MIP Proxy modifies the RRQ/BU as follows
- CoA = MIP Proxy IP address

The MIP Proxy performs security functions according to an alternative as will be discussed later in this document and then forwards the RRQ/BU to the HA.

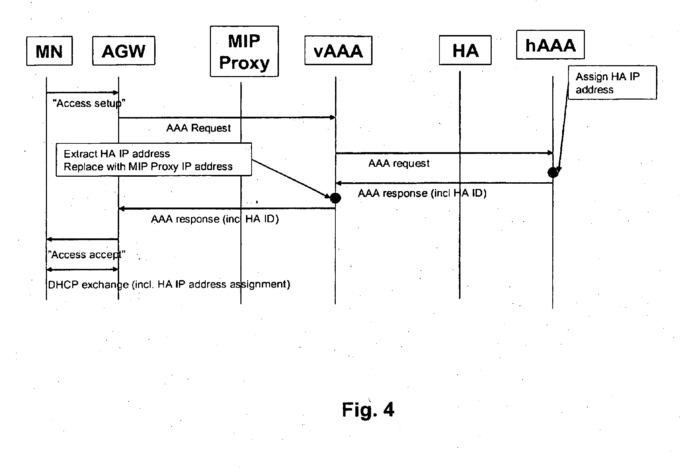

The MN and MIP Proxy need to be configured with the appropriate HA IP address and an exemplifying signalling message flow is shown in Fig. 4. One possibility to solve this is to use AAA signalling during access authentication to assign HA, e.g. AAA signalling through a radius or diameter protocol. The HN will assign the HA IP address in the AAA response sent to the MN. Since the AAA signalling for access authentication is typically relayed via the VN, the VN can extract the HA IP address from the AAA message ad replace it with the MIP Proxy IP address. The AAA message is then sent to the access network. Note that the above discussed bootstrapping solution is not the only possible solution. Also other bootstrapping methods are possible, e.g. using DNS service records.

The basic idea with the MIP Proxy is that the UP tunnel between MN/FA and HA is routed via the MIP Proxy. The MIP Proxy needs to modify the source and destination IP addresses of the tunnel IP header of each IP packet.

Mobile IP requires a Mobility Security Association (MSA) between MN and HA. The MSA is used to protect the MIP signalling messages that are sent between MN an HA. The MIP Proxy is introduced in the path between MN and HA and the consequences this has for the security must be addresses. Different alternative solutions are possible depending on what Mobile IP version (v4 or v6) is used and what type of security solution is used for that MIP version. Three different scenarios are discussed below.

MIPv4 uses authentication fields in the MIP signalling messages to protect the content. The authentication fields are calculated based on a key that is shared between MN and HA. The MIP Proxy cannot modify the signalling message without also re-calculating the authentication extension.

Two options are possible:

### 1a) Delegated authentication with fixed keys

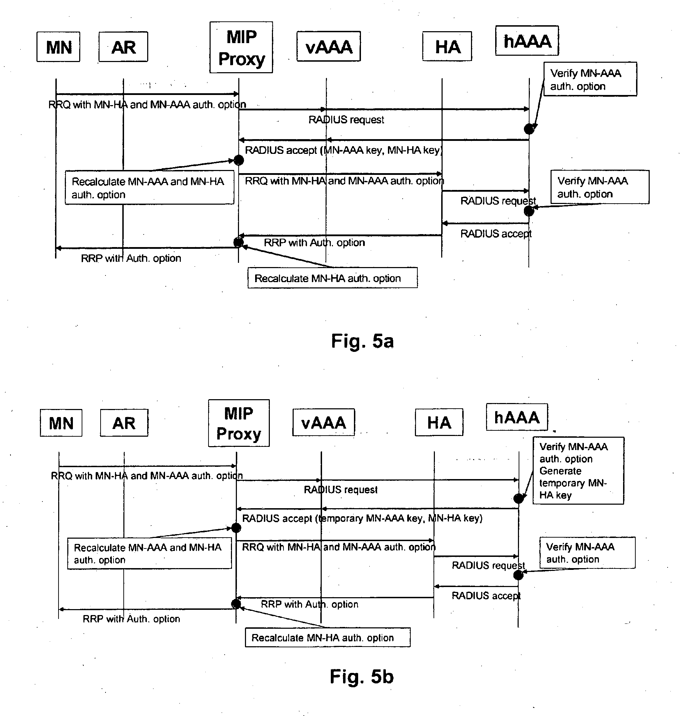

This situation is illustrated schematically in Fig. 5a where a message flow example is shown. The calculation of the authentication extensions by the HA is delegated to the MIP Proxy. The MIP proxy receives the required keys from the HN, e.g. using AAA signalling. The MIP Proxy can, based on the received keys, check the authentication extensions received from the MN and HA. The MIP Proxy can also calculate new authentication extensions for the messages it forwards towards the MN or HA. This alternative is transparent to the MN, i.e. the MN do not see the MIP proxy; it will perceive it as it is communicating with the HA directly.

The signalling between MN and MIP Proxy is thus protected in the regular way using MIP authentication extensions. The signalling between MIP Proxy and HA can either be protected using regular MIP authentication extensions, and/or by e.g. IPSec tunnels between VN and HN.

### 1b) Delegated authentication with temporary keys

This situation is illustrated schematically in Fig. 5b where a message flow example is shown. The HN may not want to send the fixed keys shared between MN and HN to the VN. Instead it may be better to create temporary MN-HA and MN-AAA keys dynamically that are sent to the VN. This alternative requires that both the MN and the HN can derive the same temporary keys. The exact algorithm for deriving the keys is not addressed here. The temporary MN-HA and MN-AAA keys are sent to the MIP Proxy during the registration process.

Apart from using temporary keys in this alternative, the actual protection of the messages is done in the same was as in alternative 1 a.

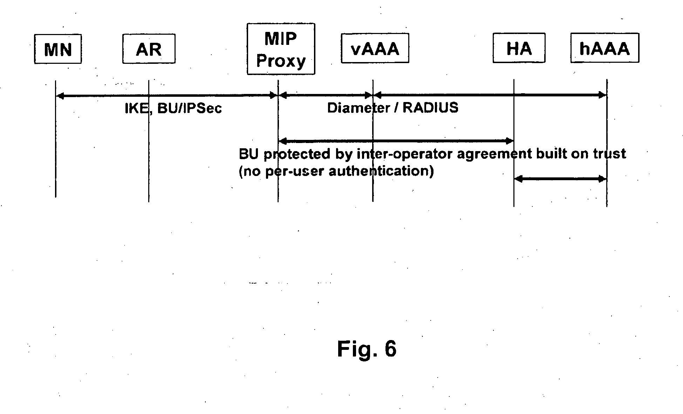

Fig. 6 illustrates schematically an embodiment of the present invention for MIP version 6 wherein a message flow example is shown. Mobile IPv6 uses in it original specification IPSec to protect the signalling. A possibility in this case is to let the MIP-specific IPSec protection just cover the messages sent between MN and MIP Proxy. Signalling between VN and HN could be protected according to some inter-operator agreement. Also this protection could of course use IPSec.

The security credentials (keys etc) needed to establish the IPSec security association between MN and MIP proxy is sent from the HN to the VN using e.g. AAA protocols.

RFC 4285 (i.e. IETF, The Internet Engineering Task Force, Request For Comment number 4285: Authentication Protocol for Mobile IPv6) provides an alternative authentication method for MIPv6. This method is similar to the MIPv4 authentication method. The same kind of security alternatives as described for alternative 1 (a and b) is thus possible also here. Note that the terminology for authentication parameters, fields, keys etc differs between MIPv4 and MIPv6 using RFC 4285.

It is assumed that reverse tunnelling is used with MIPv4. The MIP Proxy will not be able to ensure that uplink traffic is routed through the VN if triangular routing is used. This is however not to be considered a limitation in the relevant scenarios, since a Mobile Operator (MO) will most likely require reverse tunnelling to be used, e.g. to allow charging, policy enforcement and lawful intercept in the home network.

For MIPv6 it is assumed that all traffic is tunnelled through the Home Agent. The MIP Proxy will not be able to ensure that UP traffic is routed through the VN if MIPv6 route optimization is used. On the other hand, the MIP proxy can initiate route optimization on behalf of the MN using its address as care-of address.

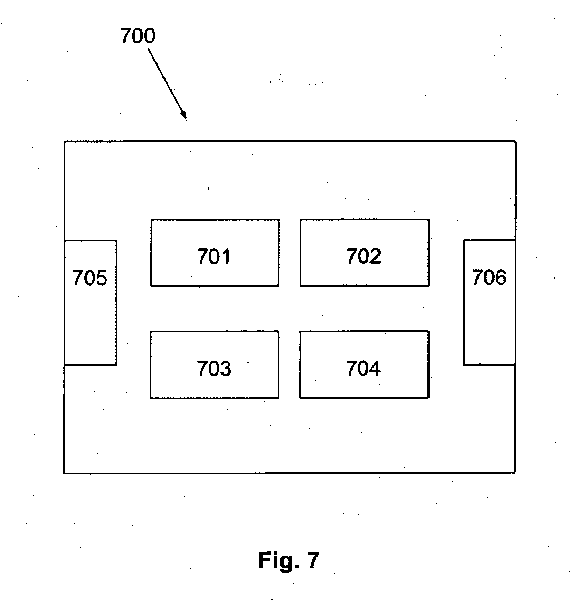

The above mentioned solution may be implemented in a number of infrastructure nodes as instruction sets in software. Fig. 7 illustrates in a schematic block diagram an infrastructure node (e.g. a support node, for instance a GGSN or SGSN) according to the present invention, wherein a processing unit 701 handles communication data and communication control information. The infrastructure node 700 further comprises a volatile (e.g. RAM) 702 and/or non volatile memory (e.g. a hard disk or flash disk) unit 703, and an interface unit 704 for interfacing control commands from an administrator of the node. The infrastructure node 700 may further comprise a downstream communication unit 705 and an upstream communication unit 706, each with a respective connecting interface. All units in the infrastructure node can communicate with each other directly or indirectly through the processing unit 701. Software for handling communication to and from the mobile nodes attached to the network is at least partly executed in this node and may be stored in the node as well; however, the software may also be dynamically loaded upon start of the node or at a later stage during for instance a service interval. The software can be implemented as a computer program product and distributed and/or stored on a removable computer readable media, e.g. diskette, CD (Compact Disk), DVD (Digital Video Disk), flash or similar removable memory media (e.g. compactflash, SD secure digital, memorystick, miniSD, MMC multimediacard, smartmedia, transflash, XD), HD-DVD (High Definition DVD), or Bluray DVD, USB (Universal Serial Bus) based removable memory media, magnetic tape media, optical storage media, magneto-optical media, bubble memory, or distributed as a propagated signal via a network (e.g. Ethernet, ATM, ISDN, PSTN, X.25, Internet, Local Area Network (LAN), or similar networks capable of transporting data packets to the infrastructure node).

It should be noted that the word "comprising" does not exclude the presence of other elements or steps than those listed and the words "a" or "an" preceding an element do not exclude the presence of a plurality of such elements. The invention can at least in part be implemented in either software or hardware. It should further be noted that any reference signs do not limit the scope of the claims, and that several "means", "devices", and "units" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

### DEFINITIONS

- BA: Binding Acknowledgement (MIPv6)
- BU: Binding Update (MIPv6)
- CP: Control Plane
- HA: Home Agent
- HMIP: Hierarchical Mobile IP
- HN: Home Network
- IP: Internet Protocol
- MIP: Mobile IP
- MN: Mobile Node (used synonymously with UE)
- MO: Mobile Operator
- RRP: Registration Reply (MIPv4)
- RRQ: Registration Request (MIPv4)
- UE: User Equipment (used synonymously with MN)
- UP: User Plane
- VN: Visited Network

## Claims

1. A system for use in an intermediate visited network (202, 302) in a telecommunication network (200, 300) for controlling communication traffic in the intermediate visited network, the system comprising a Mobile IP, MIP, proxy (207, 308, 700) for communication between a home network (201, 303) and a visiting node (209, 210, 306) communicating with an access network (203; 301), the system further comprising an authentication, authorization, and accounting, AAA server (206), wherein:
- the AAA server (206) is arranged to modify Mobile IP signalling by sending, in an AAA response message, as temporary home agent address an IP address of the MIP proxy (207,308,700) to the visiting node (209, 210, 306), and the MIP proxy (207,308,700) is arranged to setting a home agent address of the visiting node (209, 210, 306) to an address of an actual home agent (309) and setting a Care-of Address, CoA, of the visiting node (209, 210, 306) to the IP address of the MIP proxy (207,308,700), whereby a Mobile IP user plane tunnel (304) is split into two parts, one tunnel between the access network (203; 301) and the MIP proxy (207; 308), and another tunnel between the MIP proxy (207; 308) and the home network (201; 303),
- the MIP proxy (207,308,700) is further arranged to communicate with the AAA server (206) for handling authentication, authorization, and accounting services and for handling billing matters relating to communication in the Mobile IP user plane tunnel (304) between the home network (201, 303) and the visiting node (209, 210, 306), and
- the MIP proxy (207,308,700) is further arranged to relay user plane packets between the home network (201, 303) and the visiting node (209, 210, 306) via the access network (203, 301).

2. The system according to claim 1, further comprising means for setting up translation table using an authentication, authorization, and accounting, AAA, protocol signalling.

3. The system according to claim 1, wherein the address translation function comprise a care-of-address assignment.

4. The system according to claim 1, further arranged to obtain a new authentication code and replace with the obtained authentication code authentication codes in user plane packets being relayed.

5. The system according to claim 4, further arranged to obtain a new code by calculating a new code using one of delegated fixed keys and delegated temporary keys obtained from the home network of the mobile node.

6. A method for controlling traffic flows in a telecommunications network (200, 300), the telecommunications network (200, 300) comprising an intermediate visited network (202, 302) that comprises a a Mobile IP, MIP, proxy (207, 308, 700) and an authentication, authorization, and accounting, AAA server (206), the method comprising:
- in the AAA server (206), modify Mobile IP signalling by sending, in an AAA response message, as temporary home agent address an IP address of the MIP proxy (207,308,700) to a visiting node (209, 210, 306) that communicates with an access network (203, 301), and setting, in the MIP proxy (207,308,700), a home agent address of the visiting node (209, 210, 306) to an address of an actual home agent (309) and setting a Care-of Address, CoA, of the visiting node (209, 210, 306) to the IP address of the MIP proxy (207,308,700), whereby a Mobile IP user plane tunnel (304) is split into two parts, one tunnel between the access network (203; 301) and the MIP proxy (207, 308, 700) , and another tunnel between the MIP proxy (207; 308) and a home network (201; 303),
- communicating between the MIP proxy (207, 308, 700) and the AAA server (206) for handling authentication, authorization, and accounting services and to handle billing matters relating to communication in the Mobile IP user plane tunnel (304) between the home network (201, 303) and the visiting node (209, 210, 306), and
- in the MIP proxy (207, 308, 700), relaying user plane traffic through the MIP proxy between the home network (201, 303) and the visiting node (209, 210, 306) via the access network (203, 301).

7. The method according to claim 6, further comprising operating security functions for authenticating the mobile node.

8. The method according to claim 7, wherein the security functions involve an authentication, authorization, and accounting, AAA, protocol, for instance according to Radius or Diameter.

9. The method according to claim 6, further comprising: obtaining an authentication code and replacing authentication codes in content information packets being relayed with the obtained authentication code.

10. The method according to claim 9, wherein obtaining authentication code involves calculating a new code using one of delegated fixed keys and delegated temporary keys.

## Patentansprüche

1. System zur Verwendung in einem besuchten Zwischennetz (202, 302) in einem Telekommunikationsnetz (200, 300) zum Steuern des Kommunikationsverkehrs in dem besuchten Zwischennetz, wobei das System umfasst: einen Mobile IP- bzw. MIP-Proxy (207, 308, 700) zur Kommunikation zwischen einem Heimatnetz (201, 303) und einem Besuchsknoten (209, 210, 306), der mit einem Zugangsnetz (203, 301) kommuniziert, wobei das System ferner einen Authentifizierungs-, Autorisierungs- und Abrechnungs- bzw. AAA-Server (206) umfasst, wobei:
- der AAA-Server (206) dafür eingerichtet ist, eine Mobile IP-Signalisierung zu modifizieren, indem in einer AAA-Antwortnachricht eine IP-Adresse des MIP-Proxy (207, 308, 700) als temporäre Heimatagentenadresse an den Besuchsknoten (209, 210, 306) gesendet wird und der MIP-Proxy (207, 308, 700) für Folgendes eingerichtet ist: Setzen einer Heimatagentenadresse des Besuchsknotens (209, 210, 306) auf eine Adresse eines tatsächlichen Heimatagenten (309) und Setzen einer Care-of-Adresse, CoA, des Besuchsknotens (209, 210, 306) auf die IP-Adresse des MIP-Proxy (207, 308, 700), wodurch ein Mobile IP-Benutzerebenentunnel (304) in zwei Teile aufgeteilt wird, in einen Tunnel zwischen dem Zugangsnetz (203; 301) und dem MIP-Proxy (207; 308) und in einen anderen Tunnel zwischen dem MIP-Proxy (207; 308) und dem Heimatnetz (201; 303).
- der MIP-Proxy (207, 308, 700) ferner dafür eingerichtet ist, mit dem AAA-Server (206) zur Abwicklung von Authentifizierungs-, Autorisierungs- und Abrechnungsdiensten und zur Abwicklung von Abrechnungsangelegenheiten zu kommunizieren, die sich auf die Kommunikation im Mobile IP-Benutzerebenentunnel (304) zwischen dem Heimatnetz (201, 303) und dem Besuchsknoten (209, 210, 306) beziehen, und
- der MIP-Proxy (207, 308, 700) ferner dafür eingerichtet ist, Benutzerebenenpakete zwischen dem Heimatnetz (201, 303) und dem Besuchsknoten (209, 210, 306) über das Zugangsnetz (203, 301) weiterzuleiten.

2. System nach Anspruch 1, ferner umfassend Mittel zum Einrichten von Übersetzungstabellen unter Verwendung einer Authentifizierungs-, Autorisierungs- und Abrechnungs- bzw. AAA-Protokoll-Signalisierung.

3. System nach Anspruch 1, wobei die Adressübersetzungsfunktion eine Care-of-Adressvergabe umfasst.

4. System nach Anspruch 1, ferner dafür eingerichtet, einen neuen Authentifizierungscode zu beziehen und den Authentifizierungscode in weiterzuleitenden Benutzerebenenpaketen durch den bezogenen Authentifizierungscode zu ersetzen.

5. System nach Anspruch 4, ferner dafür eingerichtet ist, einen neuen Code zu beziehen, indem ein neuer Code unter Verwendung eines der delegierten festen Schlüssel und der delegierten temporären Schlüssel, die vom Heimatnetz des mobilen Knotens bezogen werden, berechnet wird.

6. Verfahren zur Steuerung von Verkehrsflüssen in einem Telekommunikationsnetz (200, 300), wobei das Telekommunikationsnetz (200, 300) ein besuchtes Zwischennetz (202, 302) umfasst, das einen Mobile IP- bzw. MIP-Proxy (207, 308, 700) und einen Authentifizierungs-, Autorisierungs- und Abrechnungs- bzw. AAA-Server (206) umfasst wobei das Verfahren umfasst:
- in dem AAA-Server (206) erfolgendes Modifizieren einer Mobile IP-Signalisierung, indem in einer AAA-Antwortnachricht eine IP-Adresse des MIP-Proxy (207, 308, 700) als temporäre Heimatagentenadresse an den Besuchsknoten (209, 210, 306), der mit einem Zugangsnetz (203, 301) kommuniziert, gesendet wird und in dem MIP-Proxy (207, 308, 700) eine Heimatagentenadresse des Besuchsknotens (209, 210, 306) auf eine Adresse eines tatsächlichen Heimatagenten (309) gesetzt wird und eine Care-of-Adresse, CoA, des Besuchsknotens (209, 210, 306) auf die IP-Adresse des MIP-Proxy (207, 308, 700) gesetzt wird, wodurch ein Mobile IP-Benutzerebenentunnel (304) in zwei Teile aufgeteilt wird, in einen Tunnel zwischen dem Zugangsnetz (203; 301) und dem MIP-Proxy (207; 308, 700) und in einen anderen Tunnel zwischen dem MIP-Proxy (207; 308) und dem Heimatnetz (201; 303).
- Kommunizieren zwischen dem MIP-Proxy (207, 308, 700) und dem AAA-Server (206) zur Handhabung von Authentifizierungs-, Autorisierungs- und Abrechnungsdiensten und zur Abwicklung von Abrechnungsangelegenheiten, die sich auf die Kommunikation im Mobil-IP-Benutzerebenentunnel (304) zwischen dem Heimatnetz (201, 303) und dem Besuchsknoten (209, 210, 306) beziehen, und
- im MIP-Proxy (207, 308, 700) erfolgendes Weiterleiten von Benutzerebenenverkehr durch den MIP-Proxy zwischen dem Heimatnetz (201, 303) und der Besuchsknoten (209, 210, 306) über das Zugangsnetz (203, 301).

7. Verfahren nach Anspruch 6, ferner umfassend Betriebssicherheitsfunktionen zum Authentifizieren des mobilen Knotens.

8. Verfahren nach Anspruch 7, wobei die Sicherheitsfunktionen ein Authentifizierungs-, Autorisierungs- und Abrechnungs- bzw. AAA-Protokoll, zum Beispiel auf den Radius oder Durchmesser bezogen, einbeziehen.

9. Verfahren nach Anspruch 6, ferner umfassend: Beziehen eines Authentifizierungscodes und Ersetzen von Authentifizierungscodes in weiterzuleitenden Inhaltsinformationspaketen durch die bezogenen Authentifizierungscodes.

10. Verfahren nach Anspruch 9, wobei der Bezug eines Authentifizierungscodes die Berechnung eines neuen Codes unter Verwendung eines der delegierten festen Schlüssel und der delegierten temporären Schlüssel einschließt.

## Revendications

1. Système destiné à être utilisé dans un réseau visité intermédiaire (202, 302) au sein d'un réseau de télécommunication (200, 300) pour commander le trafic de communication dans le réseau visité intermédiaire, le système comprenant un proxy IP mobile, MIP, (207, 308, 700) pour la communication entre un réseau domestique (201, 303) et un noeud visiteur (209, 210, 306) communiquant avec un réseau d'accès (203 ; 301), le système comprenant en outre un serveur d'authentification, autorisation et comptabilité, AAA, (206), dans lequel :
- le serveur AAA (206) est agencé de manière à modifier la signalisation IP mobile, en envoyant, dans un message de réponse AAA, en qualité d'adresse d'agent domestique temporaire, une adresse IP du système proxy MIP (207, 308, 700), au noeud visiteur (209, 210, 306), et le système proxy MIP (207, 308, 700) est agencé de manière à définir une adresse d'agent domestique du noeud visiteur (209, 210, 306) sur une adresse d'un agent domestique en cours (309), et à définir une adresse d'entretien, CoA, du noeud visiteur (209, 210, 306) sur l'adresse IP du système proxy MIP (207, 308, 700), moyennant quoi un tunnel de plan utilisateur IP mobile (304) est divisé en deux parties, à savoir un tunnel entre le réseau d'accès (203 ; 301) et le système proxy MIP (207 ; 308), et un autre tunnel entre le système proxy MIP (207 ; 308) et le réseau domestique (201 ; 303) ;
- le système proxy MIP (207, 308, 700) est en outre agencé de manière à communiquer avec le serveur AAA (206) en vue de traiter des services d'authentification, autorisation et comptabilité et de traiter des questions de facturation relatives à la communication dans le tunnel de plan utilisateur IP mobile (304) entre le réseau domestique (201, 303) et le noeud visiteur (209, 210, 306) ; et
- le système proxy MIP (207, 308, 700) est en outre agencé de manière à relayer des paquets de plan utilisateur entre le réseau domestique (201, 303) et le noeud visiteur (209, 210, 306), par l'intermédiaire du réseau d'accès (203, 301).

2. Système selon la revendication 1, comprenant en outre un moyen pour établir une table de traduction faisant appel à une signalisation de protocole d'authentification, autorisation et comptabilité AAA.

3. Système selon la revendication 1, dans lequel la fonction de traduction d'adresses comporte une affectation d'adresses d'entretien.

4. Système selon la revendication 1, en outre agencé de manière à obtenir un nouveau code d'authentification, et à remplacer les codes d'authentification par le code d'authentification obtenu, dans des paquets de plan utilisateur relayés.

5. Système selon la revendication 4, en outre agencé de manière à obtenir un nouveau code en calculant un nouveau code au moyen de l'une parmi des clés fixes déléguées et des clés temporaires déléguées obtenues auprès du réseau domestique du noeud mobile.

6. Procédé de commande des flux de trafic dans un réseau de télécommunication (200, 300), le réseau de télécommunication (200, 300) comprenant un réseau visité intermédiaire (202, 302) qui comporte un proxy IP mobile, MIP, (207, 308, 700) et un serveur d'authentification, autorisation et comptabilité, AAA, (206), le procédé consistant à :
- au niveau du serveur AAA (206), modifier la signalisation IP mobile en envoyant, dans un message de réponse AAA, en qualité d'adresse d'agent domestique temporaire, une adresse IP du système proxy MIP (207, 308, 700), à un noeud visiteur (209, 210, 306) qui communique avec un réseau d'accès (203, 301), et définir, dans le système proxy MIP (207, 308, 700), une adresse d'agent domestique du noeud visiteur (209, 210, 306) sur une adresse d'un agent domestique en cours (309), et définir une adresse d'entretien, CoA, du noeud visiteur (209, 210, 306) sur l'adresse IP du système proxy MIP (207, 308, 700), moyennant quoi un tunnel de plan utilisateur IP mobile (304) est divisé en deux parties, à savoir un tunnel entre le réseau d'accès (203 ; 301) et le système proxy MIP (207, 308, 700), et un autre tunnel entre le système proxy MIP (207 ; 308) et le réseau domestique (201 ; 303) ;
- communiquer entre le système proxy MIP (207, 308, 700) et le serveur AAA (206) en vue de traiter des services d'authentification, autorisation et comptabilité et de traiter des questions de facturation relatives à la communication dans le tunnel de plan utilisateur IP mobile (304) entre le réseau domestique (201, 303) et le noeud visiteur (209, 210, 306) ; et
- au niveau du système proxy MIP (207, 308, 700), relayer le trafic de plan utilisateur à travers le système proxy MIP entre le réseau domestique (201, 303) et le noeud visiteur (209, 210, 306), par l'intermédiaire du réseau d'accès (203, 301).

7. Procédé selon la revendication 6, consistant en outre à exploiter des fonctions de sécurité en vue d'authentifier le noeud mobile.

8. Procédé selon la revendication 7, dans lequel les fonctions de sécurité impliquent un protocole d'authentification, autorisation et comptabilité, AAA, par exemple selon le protocole « Radius » ou le protocole « Diameter ».

9. Procédé selon la revendication 6, consistant en outre à : obtenir un code d'authentification, et remplacer des codes d'authentification, dans des paquets d'informations de contenu relayés, par le code d'authentification obtenu.

10. Procédé selon la revendication 9, dans lequel l'obtention du code d'authentification consiste à calculer un nouveau code au moyen de l'une parmi des clés fixes déléguées et des clés temporaires déléguées.
